# EUROPEAN PATENT SPECIFICATION

(11) **EP 3 896 330 B1**
(45) Date of publication and mention of the grant of the patent: **20.12.2023**
(21) Application number: 21167267.0
(22) Date of filing: 07.04.2021
(51) Int. Cl.: F21L 4/00, F16B 2/00, F21V 21/02, F21V 21/088, F21V 21/116

(54) **ATTACHMENT AND ADJUSTMENT DEVICE FOR LIGHTING APPARATUSES AND CORRESPONDING METHOD**
BEFESTIGUNGS- UND JUSTIERVORRICHTUNG FÜR BELEUCHTUNGSGERÄTE UND ENTSPRECHENDES VERFAHREN
DISPOSITIF DE FIXATION ET DE RÉGLAGE POUR APPAREILS D'ÉCLAIRAGE ET PROCÉDÉ CORRESPONDANT

(30) Priority: 08.04.2020 IT 202000007495
(43) Date of publication of application: 20.10.2021
(73) Proprietor: Cortem S.p.A., 34070 Villesse (IT)
(72) Inventor: Gratton, Riccardo, 34151 Trieste (IT)
(74) Representative: Petraz, Gilberto Luigi

(56) References cited:
- WO-A2-2007/002814
- US-A- 1 774 775
- US-A- 2 004 695
- US-A- 3 177 542
- US-A- 3 464 660
- US-A- 4 138 716
- US-A1- 2002 167 806

## Description

### FIELD OF THE INVENTION

Embodiments described here concern an attachment and adjustment device for lighting apparatuses, in particular but not exclusively for lighting apparatuses with a body with a longitudinal development.

The device can be used anywhere, preferentially and in a non-restrictive way in industrial areas, in shipyards, in engine rooms of ships and also, advantageously, in areas subject to strong vibrations.

The present invention also concerns a method to attach and adjust lighting apparatuses by means of said attachment and adjustment device.

The present invention also concerns a lighting unit comprising the attachment device according to the invention and a lighting apparatus, for example of the type with a longitudinal development.

### BACKGROUND OF THE INVENTION

Lighting apparatuses are known, to be installed on a support, for example a ceiling, a wall, a pole, or suchlike, where, usually, the attachment takes place in a fixed manner. For example, lighting apparatuses are known with a body with a longitudinal development, in which one of the dimensions is preponderant over the others.

The present invention can be applied both to said apparatuses with a body with a longitudinal development and to apparatuses with a reduced body.

Such lighting apparatuses can, for example, be fixed by means of attachment devices of a known type, such as an arm or a suspension chain or other means.

For example, document US-A-1774775 describes a bracket for electric lights and flash lights. Document US-A-3177542 describes a clamping device. Document US-A-4138716 describes a lighting fixture enclosure. Document US-A-2002/167806 describes a flexible leg flashlight holder. Document US-A-2004695 describes a hanger for cables of overhead lines.

One disadvantage of known fixing methods is that the positioning of the light beam emitted by the apparatus is mainly determined by the structure of the apparatus itself, that is, by the position in which the optical source is located with respect to the body of the apparatus.

Another disadvantage is that, after installation using known attachment devices, the positioning of the light beam emitted by the apparatus cannot be varied, except by repeating the installation operations and repositioning the apparatus as desired.

Another disadvantage of known fixing means is that, in areas subject to strong vibrations, it is usually necessary to resort to fixing by means of screws, bolts or suchlike, which firmly fix the body of the apparatus to the attachment device.

There is therefore a need to perfect an attachment device for lighting apparatuses that can overcome at least one of the disadvantages of the state of the art.

In particular, one purpose of the present invention is to provide an attachment device for lighting apparatuses that allows to choose, during installation, where to direct the light beam of the apparatus.

Another purpose is to allow to vary the positioning of the apparatus, in a simple way, in order to modify the direction of the light beam.

Another purpose is to guarantee a good grip of the fixing of the lamp to the attachment device, even in the presence of high vibrations.

Another purpose of the invention is to be versatile, and able to adapt to several models, formats and/or sizes of lighting apparatuses.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, embodiments described here concern an attachment device for lighting apparatuses that allows to overcome the limits of the state of the art and eliminate the defects present therein.

In accordance with some embodiments, the attachment device is suitable for the installation of a lighting apparatus to a support, such as a ceiling, a wall, a pole or other.

The attachment and adjustment device of the present invention is as defined in appended independent claim 1.

Advantageously, by means of the tightening mean it is possible to control the opening both to allow the insertion of the lamp, for example during installation, and also to modify the positioning of the lamp itself.

Another advantage is the fact that the attachment device can be used with multiple models, formats and/or sizes of lighting apparatuses, simply by adjusting the opening of the gripping elements during the installation/insertion of the lighting apparatus.

The gripping elements can be configured to move between two extreme positions, an opening position, in which they are at a maximum distance from each other, and a closing position, in which they are at a minimum distance from each other.

One advantage is being able to define an extreme closing position, for example adapting it to the sizes of the lighting apparatuses, thus being able to avoid deforming the lighting apparatus by tightening it excessively between the gripping elements.

Another advantage is that this prevents excessively stressing the fixing element; for example, this prevents an excessive stress to close the attachment body from being totally or partly unloaded on the fixing element, deforming it or weakening its structure.

Advantageously, the device is provided with a thrust element able to facilitate the opening of the device. This prevents the device from becoming blocked, for example because it has not been moved for some time.

Advantageously, the attachment body can be made in a single body, for example by extrusion and cut to the desired length on each occasion. It is therefore possible to avoid mechanical workings to produce it, also reducing the quantity of materials and the energy required for the workings, as well as simplify warehouse management reducing the quantity and variety of materials, in terms of shapes and sizes.

Another advantage is the fact that, since it can be made in a single body, it has better mechanical characteristics of strength and desired flexibility in the gripping elements.

According to some embodiments, at least part of the internal surface of the gripping element, facing during use toward the lighting apparatus, has gripping means.

The gripping means as above are configured, when they come into contact with the body of the lighting apparatus, to improve the fixing of the lighting apparatus.

Some embodiments described here also concern a lighting unit comprising the attachment and adjustment device according to the invention and a lighting apparatus.

According to a preferred embodiment, the lighting apparatus as above has, on its external surface, at least one portion mating with the gripping means of the gripping element and suitable to cooperate with them.

Advantageously, during use, the coupling of the mating portion as above with the gripping means allows to guarantee a good grip of the fixing of the lighting apparatus to the attachment device.

In this way, even in the case of installation in a zone with high vibrations, it is possible to position the lighting apparatus avoiding the use of fixing elements such as screws, bolts and suchlike. Therefore, additional workings are avoided, and the installation of the lighting apparatus is faster.

This also prevents drilling and/or working other parts of the attachment device, which can also weaken its mechanical structure.

Some embodiments described here also concern a method to attach and adjust a lighting apparatus by means of an attachment and adjustment device according to the invention.

It is therefore possible to easily modify, even in the case of installations in zones with high vibrations, the positioning of the lighting apparatus, even after installation.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a perspective view of an attachment device;
- figs. 2a and 2b are perspective views of the attachment device of fig. 1 associated with a lighting apparatus;
- figs. 3a and 3b show the section views of the attachment device and of the lighting apparatus according to trace line III-III of fig. 2a.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the possible embodiments of the invention, of which one example is shown in the attached drawings. This example is supplied by way of illustration of the invention and shall not be understood as a limitation thereof. For example, one or more characteristics shown or described insomuch as they are part of one embodiment can be varied or adopted on, or in association with, other embodiments to produce another embodiment. It is understood that the present invention shall include all such possible modifications and variants.

With reference to the attached drawings, an attachment and adjustment device 10 for lighting apparatuses 100, hereafter referred to as device 10, is described.

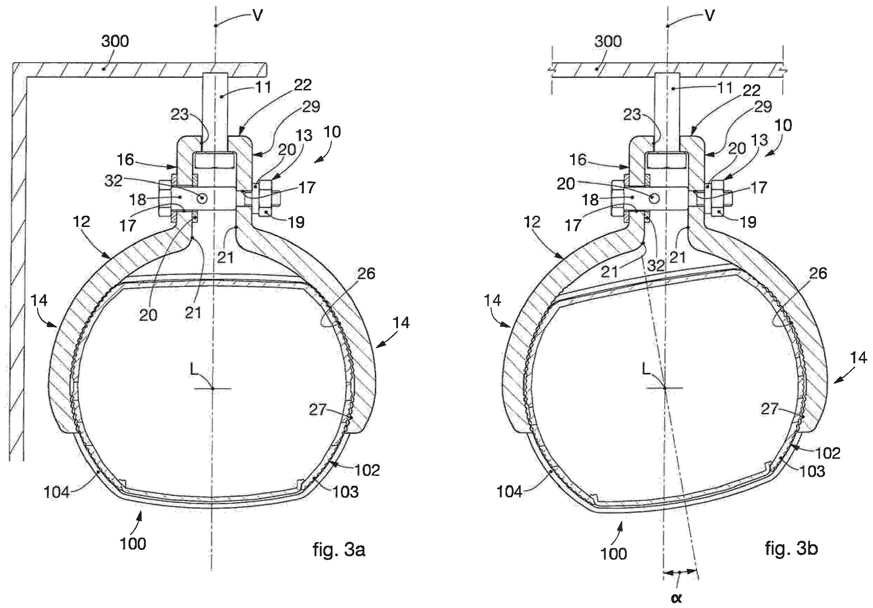

The device 10 is suitable for the installation of a lighting apparatus 100 to a support 300, such as a ceiling (fig.3b), a wall, a pole (fig. 3a) or suchlike.

The device 10 can be made of metal material or polymeric material, for example of polycarbonate, or of a combination of metal and polymeric materials.

Preferably, the device 10 is made of metal material such as, for example, stainless steel or aluminum, which has a high strength, durability over time and resistance to corrosive substances such as acetone, benzene, hexane.

For example, it can be made of aluminum, such as anodized aluminum, thanks to its characteristics of lightness, strength and malleability.

Alternatively, the device 10 is made of polymeric materials, which can be resistant to the presence of corrosive substances such as nitric acid or pentane.

Advantageously, but not exclusively, the device 10 is suitable to support lighting apparatuses 100 having two substantially parallel opposite sides.

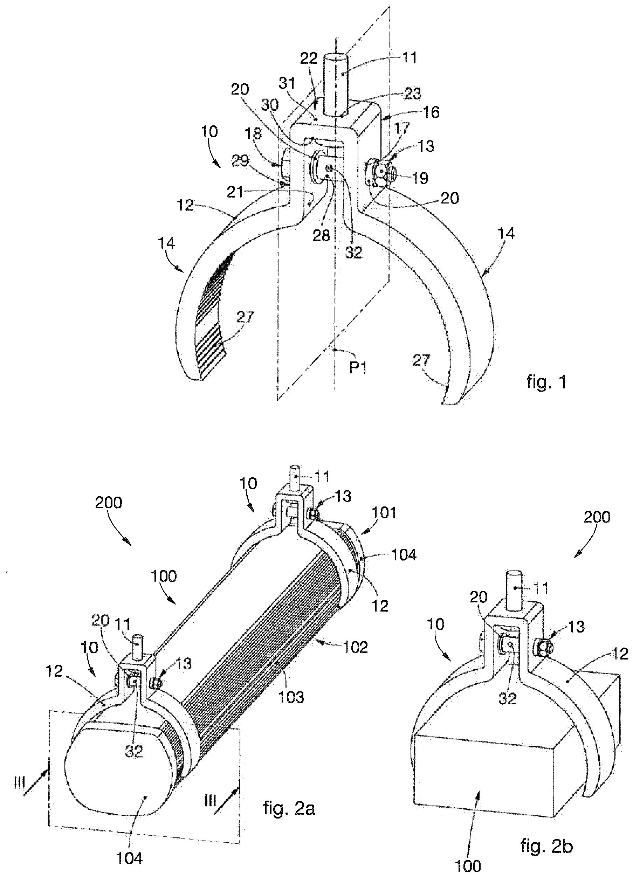

In particular, but not exclusively, the device 10 is suitable to support lighting apparatuses 100 with a longitudinally developing body (fig. 2a).

As a non-limiting example, the device 10 is suitable for use with explosion-proof lighting apparatuses 100.

According to some embodiments, the device 10 comprises at least one anchoring mean 11 for anchoring to the support 300.

According to requirements, by way of example, the anchoring mean 11 can be a rigid or in any case flexible tie-rod, or a direct attachment or another mean.

For example, the anchoring mean 11 can be a screw for concrete, suitable to be screwed to a ceiling 300. As a further example, it can be a suspension cable, a chain or an arm with elements for fixing to the support 300 or suchlike.

The device 10 comprises an attachment body 12 and at least one tightening mean 13.

The attachment body 12 can be configured as a more or less thick foil-like element, having a suitable section, such as for example rectangular, semicircular, arched or suchlike.

The attachment body 12 can comprise at least two specialized gripping elements 14 and at least one fixing element 16, with which the anchoring mean 11 and tightening mean 13 cooperate.

According to a first preferential embodiment, the attachment body 12 is made in a single body.

In some variants, the attachment body 12 can be divided into two or more parts cooperating with each other.

The gripping elements 14 can be configured to tighten toward the body 101 of the lighting apparatus 100.

The at least one tightening mean 13 is configured to interact with the fixing element 16 in order to control the closing and/or opening of the gripping elements 14.

Advantageously, by means of the tightening mean 13 it is possible to adjust the opening of the device 10 both to allow the insertion of the lighting apparatus 100, for example during installation, and also to modify the positioning of the lighting apparatus 100 itself.

The attachment body 12 can be configured to allow the adjustment of the positioning of the lighting apparatus 100 at least around a longitudinal axis L thereof.

For example, and as shown in fig. 3b, the lighting apparatus 100 can be fixed with a positioning with respect to a vertical axis V by an angle α, α being comprised between 0 and 45°, preferably between 0° and 30°.

The fixing element 16 can comprise at least one transverse element 22 and two lateral elements 29.

According to some embodiments, the lateral elements 29 can comprise through holes 17.

The tightening mean 13 can be able to be inserted in the through holes of the lateral elements 29.

According to some embodiments, the tightening mean 13 can comprise a body 18, such as a screw or a shank screw, and closing elements 19, for example a nut, and/or packing elements 20.

According to some embodiments, the packing elements 20 can be flat, spring, split spring washers or suchlike. Advantageously, split spring or spring washers improve the fixing of the tightening mean 13 even in environments with strong vibrations, preventing the closing elements from becoming unscrewed from the body 18.

According to some embodiments, the tightening mean 13 is configured to define an extreme closing position of the gripping elements 14, in which the gripping elements 14 are at a minimum distance from each other.

For example, the tightening mean 13 can have parts able to abut against an internal face 21 of a lateral element 29 of the fixing element 16.

By way of example, in the case of a shank screw 18, the shank 28 can be able to abut against an internal face 21 of the lateral element 29 or against a washer suitably positioned to protect the internal face 21.

Advantageously, the tightening mean 13 can be configured to control the opening of the device 10. This prevents the device 10 from becoming blocked in a closed position, for example because the device 10 has not been moved for some time.

For example, by unscrewing the screw 18, the gripping elements 14 can be forced to separate allowing the opening of the device 10.

Advantageously, in correspondence with the body 18 of the tightening mean 13 there is a thrust element 32. This thrust element 32 can be able to facilitate the opening of the device 10.

By way of example and as shown in fig. 1, the thrust element 32 can be a transverse pin inserted in a hole of the body 18. It can also be a circular ring fixed in a groove of the body 18, or suchlike.

When the tightening mean 13 is driven to open the device 10, the thrust element 32 can be able to press on the internal face 21 of the lateral element 29 or on a washer 20 suitably positioned to protect the internal face 21, forcing the gripping element 14 to open.

For example, when the tightening mean 13 comprises a screw 18, by acting counterclockwise on the screw 18 to open the device 10, after a segment of travel the transverse pin 32 can abut against the internal face 21, thrusting the fixing element 16 outward.

In some embodiments, the tightening mean 13 can have one or more intermediate insertion positions, in order to allow the lighting apparatus 100 to be kept in position after the insertion and its positioning to be adjusted, before the stable fixing of the lighting apparatus 100 to the device 10 in the extreme closing position.

According to some variants, not shown in the drawings, the tightening mean 13 can be a collar with a tightening screw that can be positioned around the fixing element 16, or an adjustable clamp element fixed to external faces of the lateral elements 29.

According to some embodiments, the gripping elements 14 are configured to move between two extreme positions, an opening one, in which the gripping elements 14 are at a maximum distance from each other, and the closing one.

For example, the extreme closing position can be reached when the shank 18 abuts against an internal face 21 of the lateral element 29.

As shown in fig. 1, the gripping elements 14 can be disposed symmetrically with respect to a central plane P1.

According to alternative embodiments, the gripping elements 14 can be disposed in an asymmetrical manner.

The transverse element 22 of the fixing element 16 can be able to put the lateral elements 29 in contact.

The transverse element 22 can be straight or curved.

For example, it can have a concavity facing toward the inside of the attachment body 12, in the shape of a semicircle. Advantageously, this shape can increase the elasticity of the attachment body 12.

There can be a single transverse element 22 connected to all the lateral elements 29, for example when the attachment body 12 is made in a single body, as shown in the attached drawings.

In some variants, not shown in the drawings, in which the attachment body 12 can be divided into two or more parts cooperating with each other, the attachment body 12 can be divided in correspondence with the transverse elements 22.

In such variants, each lateral element 29 can have one transverse element 22 able to come into contact, for example resting, with another lateral element 29 and/or with the transverse element 22 of the other lateral element 29.

In one example not shown in the drawings, the transverse elements 22 can have, in correspondence with their terminal part intended to come into contact with the other transverse element 22, one a recess and the other a protrusion mating with said recess, in order to allow, during use, the correct positioning of one transverse element 22 with respect to the other.

As another example not shown in the drawings, the transverse elements 22 can be slightly offset with respect to each other, so that the upper face 31 of at least one of the transverse elements 22 comes into at least partial contact with the lower face 30 of the other transverse element 22 and, optionally, the terminal part of one of the transverse elements 22 comes into contact with the opposite lateral element 29.

At least one transverse element 22 can have a through hole 23, into which the anchoring mean 11 can be inserted.

In the example cited above and shown in figs. 3a and 3b, in which the anchoring mean 11 can be a screw for concrete, the body of the screw can be able to be inserted in the through hole 23 and couple with the support 300, and the head can be able to abut against the lower part of the at least one transverse element 22 in order to support the attachment body 12.

According to some embodiments, the internal surfaces 26 of the gripping elements 14 can be smooth or have gripping means 27 at least on part of their extension.

The gripping means 27 are configured, when they come into contact with the body 101 of the lighting apparatus 100, to improve the fixing of the lighting apparatus 100.

For example, such gripping means 27 can be satin surfaces, rough surfaces, knurls, protrusions, grooves. Preferably, such gripping means 27 can be grooves.

Some embodiments described here also concern a lighting unit 200 comprising an attachment and adjustment device 10 according to the invention and a lighting apparatus 100.

The lighting apparatus 100 can comprise a body 101 of the lighting apparatus 100. In a preferential but not exclusive form shown in fig. 2a, the body 101 can have a longitudinal development.

The body 101 can have a square, rectangular (fig. 2b), circular, ellipsoidal section or suchlike. Preferably but not exclusively, the section can be at least partly mating, during use, with the gripping elements 14.

The lighting apparatus 100 can comprise closing elements 104 configured to close the body 101 at its ends.

According to a preferred embodiment, the body 101 has, at least on one portion of its external surface 102, retaining elements 103 mating with the gripping means 27 of the gripping elements 14.

For example, and as shown in fig. 2a, the portion of the external surface 102 able to come into contact with the device 10 has grooves 103.

Some embodiments described here also concern a method to attach and adjust a lighting apparatus 100 by means of an attachment and adjustment device 10 according to the invention.

This method can provide to:
- connect the device 10 to a support 300 by means of at least one anchoring mean 11;
- dispose gripping elements 14 of the device 10 substantially in an extreme open position;
- insert the lighting apparatus 100 and tighten the gripping elements 14 up to an intermediate insertion position, so that the lighting apparatus 100 is kept in position but it is possible to adjust its positioning;
- if necessary, adjust the positioning of the lighting apparatus 100;
- tighten the gripping elements 14 up to a closing position.

According to some embodiments, the method can provide to reopen the device 10 by driving a tightening mean 13 to open.

The method provides that one thrust element 32, after a segment of travel, abuts against an internal face 21 of a fixing element 16. It is then provided that the thrust element 32 thrusts the fixing element 16 and, therefore, the gripping element 14, outward.

By way of example, if the tightening mean 13 comprises a screw, the device 10 can be opened by acting counterclockwise on the screw 13. The thrust element 32, or transverse pin, after a segment of travel can abut against the internal face 21 thrusting the gripping element 14 outward.

According to some embodiments, the method can also provide, following the installation, to once again adjust the positioning of the lighting apparatus 100.

It is clear that modifications and/or additions of parts or steps may be made to the attachment and adjustment device 10 for lighting apparatuses 100, to the lighting unit 200 and to the attachment and adjustment method as described heretofore, without departing from the field and scope of the present invention as defined by the claims.

It is also clear that, although the present invention has been described with reference to some specific examples, a person of skill in the art shall certainly be able to achieve many other equivalent forms of device 10, lighting unit 200 and method, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Attachment and adjustment device for lighting apparatuses (100) comprising at least one anchoring mean (11) for connection to a support (300), an attachment body (12) and at least one tightening mean (13), wherein the attachment body (12) comprises at least two gripping elements (14) configured to tighten toward the body (101) of the lighting apparatus (100), and at least one fixing element (16), with which said anchoring mean (11) and said tightening mean (13) cooperate, said at least one tightening mean (13) being configured to interact with said fixing element (16) to control the opening and closing of the gripping elements (14), said attachment body (12) being configured to allow the adjustment of the positioning of said lighting apparatus (100) at least around a longitudinal axis (L) thereof, said device being **characterized in that** said at least one tightening mean (13) is provided with a thrust element (32) configured to abut, during the opening of the device (10), on an internal face (21) of a fixing element (16), and to thrust the gripping element (14) outward.

2. Device as in claim 1, **characterized in that** said gripping elements (14) are configured to move between two extreme positions, an opening position, in which the gripping elements (14) are at a maximum distance from each other, and a closing position, in which the gripping elements (14) are at a minimum distance from each other.

3. Device as in claim 2, **characterized in that** said at least one tightening mean (13) is configured to abut against an internal face (21) of the fixing element (16), defining said extreme closing position.

4. Device as in any claim hereinbefore, **characterized in that** said fixing element (16) comprises at least one transverse element (22) which has a through hole (23) in which the anchoring mean (11) is inserted to couple with the support (300) in order to support the attachment body (12).

5. Device as in any claim hereinbefore, **characterized in that** the internal surfaces (26) of the gripping elements (14) can have, at least on part of their extension, gripping means (27) configured to improve, when they come into contact with the body (101) of the lighting apparatus(100), the tightening of the lighting apparatus (100).

6. Device as in any claim hereinbefore, **characterized in that** said attachment body (12) is made in a single body.

7. Lighting unit comprising an attachment and adjustment device (10) as in any claim from 1 to 6 and a lighting apparatus (100).

8. Unit as in claim 7, **characterized in that** the lighting apparatus (100) has, at least on one portion of its external surface (102), retaining elements (103) mating with gripping means (27) of the attachment and adjustment device (10).

9. Method to attach and adjust a lighting apparatus (100) by means of an attachment and adjustment device (10) as in claims from 1 to 6, said method providing to:
- connect said attachment and adjustment device (10) to a support (300) by means of the at least one anchoring mean (11);
- dispose gripping elements (14) of the attachment and adjustment device (10) substantially in an extreme opening position;
- insert the lighting apparatus (100) and tighten the gripping elements (14) up to an intermediate insertion position;
- if necessary, adjust the positioning of the lighting apparatus (100);
- tighten the gripping elements (14) up to a closing position,
wherein the method further provides that the at least one tightening mean (13) is provided with a thrust element (32) configured to abut during the opening of the device (10), on an internal face (21) of the fixing element (16), and to thrust the gripping element (14) outward.

## Patentansprüche

1. Befestigungs- und Justiervorrichtung für Beleuchtungsvorrichtungen (100), die mindestens ein Verankerungsmittel (11) zur Verbindung mit einem Träger (300), einen Befestigungskörper (12) und mindestens ein Anziehmittel (13) umfasst, wobei der Befestigungskörper (12) mindestens zwei Greifelemente (14), die so konfiguriert sind, dass sie sich gegen den Körper (101) der Beleuchtungsvorrichtung (100) festziehen, und mindestens ein Fixierungselement (16), mit dem das Verankerungsmittel (11) und das Anziehmittel (13) zusammenwirken, umfasst, wobei das mindestens eine Anziehmittel (13) so konfiguriert ist, dass es mit dem Fixierungselement (16) zusammenwirkt, um das Öffnen und Schließen der Greifelemente (14) zu steuern, wobei der Befestigungskörper (12) so konfiguriert ist, dass er die Justierung der Positionierung der Beleuchtungsvorrichtung (100) zumindest um eine Längsachse (L) derselben ermöglicht, wobei die Vorrichtung **dadurch gekennzeichnet ist, dass** das mindestens eine Anziehmittel (13) mit einem Schubelement (32) versehen ist, das so konfiguriert ist, dass es während des Öffnens der Vorrichtung (10) an einer Innenfläche (21) eines Fixierungselements (16) anliegt und das Greifelement (14) nach außen schiebt.

2. Vorrichtung nach Anspruch 1, **dadurch gekennzeichnet, dass** die Greifelemente (14) so konfiguriert sind, dass sie sich zwischen zwei Extrempositionen, einer Öffnungsposition, in der die Greifelemente (14) einen maximalen Abstand voneinander haben, und einer Schließposition, in der die Greifelemente (14) einen minimalen Abstand voneinander haben, bewegen.

3. Vorrichtung nach Anspruch 2, **dadurch gekennzeichnet, dass** das mindestens eine Anziehmittel (13) so konfiguriert ist, dass es an einer Innenfläche (21) des Fixierungselements (16) anliegt, wodurch die extreme Schließposition definiert wird.

4. Vorrichtung nach irgendeinem der vorhergehenden Ansprüche, **dadurch gekennzeichnet, dass** das Fixierungselement (16) mindestens ein Querelement (22) umfasst, das ein durchgehendes Loch (23) aufweist, in das das Verankerungsmittel (11) eingeführt und mit dem Träger (300) verbunden wird, um den Befestigungskörper (12) zu tragen.

5. Vorrichtung nach irgendeinem der vorhergehenden Ansprüche, **dadurch gekennzeichnet, dass** die Innenflächen (26) der Greifelemente (14) zumindest auf einem Teil ihrer Erstreckung Greifmittel (27) aufweisen können, die so konfiguriert sind, dass sie, wenn sie in Kontakt mit dem Körper (101) der Beleuchtungsvorrichtung (100) kommen, das Festziehen der Beleuchtungsvorrichtung (100) verbessern.

6. Vorrichtung nach irgendeinem der vorangehenden Ansprüche, **dadurch gekennzeichnet, dass** der Befestigungskörper (12) aus einem einzigen Körper besteht.

7. Beleuchtungseinheit umfassend eine Befestigungs- und Justiervorrichtung (10) nach irgendeinem der Ansprüche 1 bis 6 und einer Beleuchtungsvorrichtung (100).

8. Einheit nach Anspruch 7, **dadurch gekennzeichnet, dass** die Beleuchtungsvorrichtung (100) zumindest auf einem Teil ihrer Außenfläche (102) Halteelemente (103) aufweist, die mit Greifmitteln (27) der Befestigungs- und Justiervorrichtung (10) in Eingriff stehen.

9. Verfahren zum Befestigen und Justieren einer Beleuchtungsvorrichtung (100) mittels einer Befestigungs- und Justiervorrichtung (10) nach irgendeinem der Ansprüche 1 bis 6, wobei das Verfahren folgendes vorsieht:
- Verbinden der Befestigungs- und Justiervorrichtung (10) mit einem Träger (300) mittels des mindestens einen Verankerungsmittels (11);
- Anordnen von Greifelementen (14) der Befestigungs- und Justiervorrichtung (10) im Wesentlichen in einer extremen Öffnungsposition;
- Einsetzen der Beleuchtungsvorrichtung (100) und Anziehen der Greifelemente (14) bis zu einer intermediären Einsetzposition;
- gegebenenfalls Justieren der Positionierung der Beleuchtungsvorrichtung (100);
- Anziehen der Greifelemente (14) bis zu einer Schließposition,
wobei das Verfahren ferner vorsieht, dass das mindestens eine Anziehmittel (13) mit einem Schubelement (32) versehen ist, das so konfiguriert ist, dass es während des Öffnens der Vorrichtung (10) an einer Innenfläche (21) des Fixierungselements (16) anliegt und das Greifelement (14) nach außen schiebt.

## Revendications

1. Dispositif de fixation et d'ajustement pour appareils d'éclairage (100) comprenant au moins un moyen d'ancrage (11) pour une connexion à un support (300), un corps de fixation (12) et au moins un moyen de serrage (13), dans lequel le corps de fixation (12) comprend au moins deux éléments de préhension (14) configurés pour se serrer vers le corps (101) de l'appareil d'éclairage (100), et au moins un élément de fixation (16), avec lequel ledit moyen d'ancrage (11) et ledit moyen de serrage (13) coopèrent, ledit au moins un moyen de serrage (13) étant configuré pour interagir avec ledit élément de fixation (16) afin de commander l'ouverture et la fermeture des éléments de préhension (14), ledit corps de fixation (12) étant configuré pour permettre l'ajustement du positionnement dudit appareil d'éclairage (100) au moins autour d'un axe longitudinal (L) de celui-ci, ledit dispositif étant **caractérisé en ce que** ledit au moins un moyen de serrage (13) est pourvu d'un élément de poussée (32) configuré pour venir en butée, pendant l'ouverture du dispositif (10), sur une face interne (21) d'un élément de fixation (16), et pour pousser l'élément de préhension (14) vers l'extérieur.

2. Dispositif selon la revendication 1, **caractérisé en ce que** lesdits éléments de préhension (14) sont configurés pour se déplacer entre deux positions extrêmes, une position d'ouverture, dans laquelle les éléments de préhension (14) sont à une distance maximale l'un de l'autre, et une position de fermeture, dans laquelle les éléments de préhension (14) sont à une distance minimale l'un de l'autre.

3. Dispositif selon la revendication 2, **caractérisé en ce que** ledit au moins un moyen de serrage (13) est configuré pour venir en butée contre une face interne (21) de l'élément de fixation (16), définissant ladite position de fermeture extrême.

4. Dispositif selon l'une quelconque des revendications précédentes, **caractérisé en ce que** ledit élément de fixation (16) comprend au moins un élément transversal (22) qui présente un trou traversant (23) dans lequel le moyen d'ancrage (11) est inséré pour un couplage avec le support (300) afin de supporter le corps de fixation (12).

5. Dispositif selon l'une quelconque des revendications précédentes, **caractérisé en ce que** les surfaces internes (26) des éléments de préhension (14) peuvent présenter, au moins sur une partie de leur extension, des moyens de préhension (27) configurés pour améliorer, lorsqu'ils entrent en contact avec le corps (101) de l'appareil d'éclairage (100), le serrage de l'appareil d'éclairage (100).

6. Dispositif selon l'une quelconque des revendications précédentes, **caractérisé en ce que** ledit corps de fixation (12) est réalisé en un corps unique.

7. Unité d'éclairage comprenant un dispositif de fixation et d'ajustement (10) selon l'une quelconque des revendications 1 à 6 et un appareil d'éclairage (100).

8. Unité selon la revendication 7, **caractérisée en ce que** l'appareil d'éclairage (100) présente, au moins sur une partie de sa surface externe (102), des éléments de retenue (103) s'appariant avec des moyens de préhension (27) du dispositif de fixation et d'ajustement (10).

9. Procédé de fixation et d'ajustement d'un appareil d'éclairage (100) au moyen d'un dispositif de fixation et d'ajustement (10) selon les revendications 1 à 6, ledit procédé comprenant les étapes consistant à :
- connecter ledit dispositif de fixation et d'ajustement (10) à un support (300) au moyen du au moins un moyen d'ancrage (11) ;
- disposer des éléments de préhension (14) du dispositif de fixation et d'ajustement (10) sensiblement dans une position d'ouverture extrême ;
- insérer l'appareil d'éclairage (100) et serrer les éléments de préhension (14) jusqu'à une position d'insertion intermédiaire ;
- si nécessaire, ajuster le positionnement de l'appareil d'éclairage (100) ;
- serrer les éléments de préhension (14) jusqu'à une position de fermeture,
dans lequel le procédé prévoit en outre que le au moins un moyen de serrage (13) est pourvu d'un élément de poussée (32) configuré pour venir en butée, pendant l'ouverture du dispositif (10), sur une face interne (21) de l'élément de fixation (16), et pour pousser l'élément de préhension (14) vers l'extérieur.
